# EUROPEAN PATENT APPLICATION

(11) **EP 4 492 719 A1**
(43) Date of publication of application: **15.01.2025**
(21) Application number: 23773748.1
(22) Date of filing: 17.03.2023
(51) Int. Cl.: H04L 5/00

(54) **TIME UNIT STRUCTURE DETERMINATION METHOD, COMMUNICATION DEVICE AND STORAGE MEDIUM**

(30) Priority: 22.03.2022 CN 202210286955
(71) Applicant: ZTE Corporation, Shenzhen, Guangdong 518057 (CN)
(72) Inventor: BI, Feng, Shenzhen, Guangdong 518057 (CN); LU, Youxiong, Shenzhen, Guangdong 518057 (CN); XING, Weimin, Shenzhen, Guangdong 518057 (CN); HU, Yuzhou, Shenzhen, Guangdong 518057 (CN); MIAO, Ting, Shenzhen, Guangdong 518057 (CN); HE, Haigang, Shenzhen, Guangdong 518057 (CN); CHEN, Jie, Shenzhen, Guangdong 518057 (CN)
(74) Representative: Aipex B.V.
(86) International application number: PCT/CN2023/082307
(87) International publication number: WO 2023/179500

(57) **Abstract**

Provided are a method for determining a structure of time unit, a communication device and a storage medium. In this method, a symbol allocation parameter of a carrier is determined; and a structure of the time unit of the carrier is determined according to the symbol allocation parameter.

## Description

This application claims priority to Chinese Patent Application No. 202210286955.2 filed with the China National Intellectual Property Administration (CNIPA) on Mar. 22, 2022, the disclosure of which is incorporated herein by reference in its entirety.

### TECHNICAL FIELD

The present application relates to the field of wireless communication network technology, for example, a method for determining a structure of time unit, a communication device and a storage medium.

### BACKGROUND

With the continuous advancement of radio technology, various radio services have emerged in large numbers. In addition to cellular services between base stations and terminals, different versions of Long Term Evolution (LTE) or New Radio (NR) also include vehicle-to-everything (V2X) services. Communication links of V2X services are referred to as sidelinks (SLs). When a service needs to be transmitted between communication devices, service data may not be forwarded by other network devices but may be directly transmitted from a data source device to a target device, that is, direct communication is conducted between the devices.

In a V2X deployment scenario, communication devices using LTE V2X and NR V2X can coexist within the same frequency resource, where the same frequency resource generally refers to the same carrier or the same frequency band. At a certain occasion, the communication devices may receive LTE V2X service data, receive NR V2X service data or receive LTE V2X service data and NR V2X service data, and input signals at various occasions have different strength. In this case, due to the single structure of the carrier in the time domain, the gain of different symbols cannot be differentially controlled, and the strength of output signals at various occasions cannot be automatically adjusted according to the strength of input signals, resulting in poor stability of a receiving terminal receiving signals and low reliability of sidelink communication.

### SUMMARY

The present application provides a method for determining a structure of time unit, a communication device and a storage medium.

Embodiments of the present application provide a method for determining a structure of time unit. The method includes the following.

A symbol allocation parameter of a carrier is determined.

A structure of the time unit of the carrier is determined according to the symbol allocation parameter.

The embodiments of the present application further provide a communication device. The communication device includes a memory, a processor and a computer program stored in the memory and executable by the processor, where the processor, when executing the computer program, implements the preceding method for determining a structure of time unit.

The embodiments of the present application further provide a computer-readable storage medium. The computer-readable storage medium is configured to store a computer program which, when executed by a processor, causes the processor to implement the preceding method for determining a structure of time unit.

### BRIEF DESCRIPTION OF DRAWINGS

FIG. 1 is a flowchart of a method for determining a structure of time unit according to an embodiment;
FIG. 2 is an implementation diagram of a structure of the time unit according to an embodiment;
FIG. 3 is an implementation diagram of another structure of the time unit according to an embodiment;
FIG. 4 is an implementation diagram of another structure of the time unit according to an embodiment;
FIG. 5 is an implementation diagram of another structure of the time unit according to an embodiment;
FIG. 6 is an implementation diagram of another structure of the time unit according to an embodiment;
FIG. 7 is an implementation diagram of another structure of the time unit according to an embodiment;
FIG. 8 is an implementation diagram of performing carrier aggregation (CA) according to a physical sidelink feedback channel (PSFCH) according to an embodiment;
FIG. 9 is another implementation diagram of performing carrier aggregation according to a PSFCH according to an embodiment;
FIG. 10 is another implementation diagram of performing carrier aggregation according to a PSFCH according to an embodiment;
FIG. 11 is a structural diagram of an apparatus for determining a structure of the time unit according to an embodiment; and
FIG. 12 is a structural diagram of hardware of a communication device according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

Communication devices may receive Long Term Evolution (LTE) vehicle-to-everything (V2X) service data, receive New Radio (NR) V2X service data or receive LTE V2X service data and NR V2X service data at a certain occasion, and input signals at various occasions have different strength. The communication devices achieves an appropriate strength of output signals through automatic gain control (AGC) according to the strength of the input signals, however, the time resources occupied by the AGC process are like positions of orthogonal frequency-division multiplexing (OFDM) symbols, so how the communication devices process AGC symbols (precisely due to the processing need of AGC automatically adjusting the strength of the output signals, a sending terminal needs to send some special symbols to help a receiving terminal perform AGC processing, where these special symbols can be referred to as AGC symbols) as well as the positions and length of available sidelink (SL) symbols all need to be determined.

In an embodiment of the present application, a method for determining a structure of time unit is provided. Through this method, the positions and length of available SL symbols can be determined, and structure of the time units can be obtained through division, for example, AGC symbols can be processed, so automatic gain control is achieved.

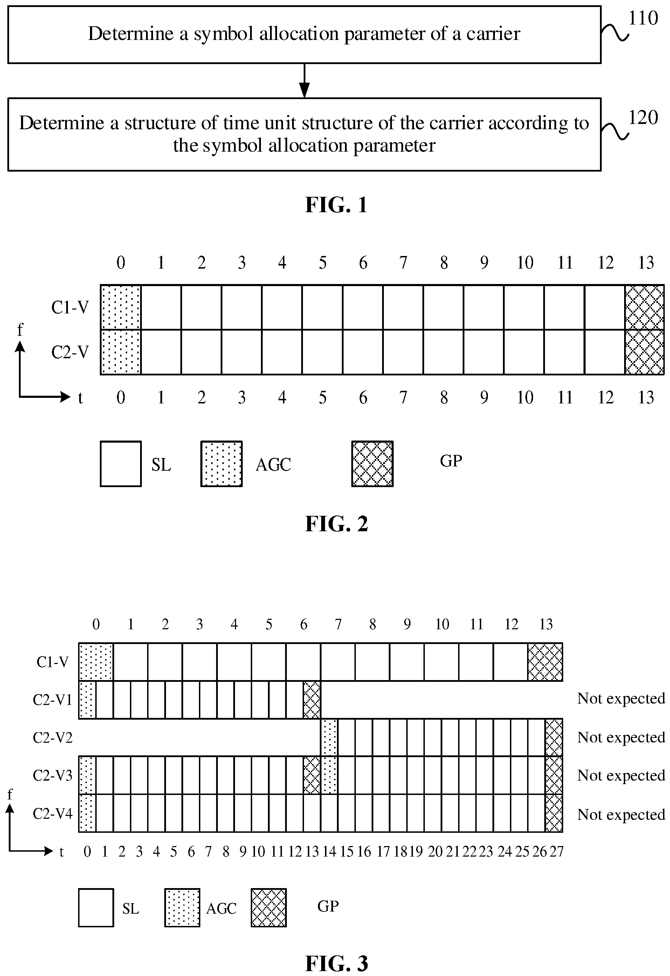

FIG. 1 is a flowchart of a method for determining a structure of time unit according to an embodiment. As shown in FIG. 1, the method provided in the embodiment may be applied to a communication device and includes 110 and 120.

In 110, a symbol allocation parameter of a carrier is determined.

In 120, a structure of the time unit of the carrier is determined according to the symbol allocation parameter.

In the embodiment, the symbol allocation parameter may refer to the position and length of a symbol (the symbol may be used for transmitting signals or data) and may also be referred to as symbol allocation. A time unit may refer to a slot, a subframe or a sidelink symbol region. A structure may refer to the position of a special symbol such as start and end symbols, an AGC symbol, a Guard Period (GP) symbol and a physical sidelink feedback channel (PSFCH) symbol and is used for dividing symbols within a time unit, so the gain of the symbols can be controlled. The start and end symbols may be understood as the first symbol of a time unit and the last symbol of the time unit.

In the embodiment, the symbol allocation parameter of the carrier is first determined, and on this basis, the structure of the time unit of the carrier can be determined according to the determined symbol allocation parameter. The symbol allocation parameter of the carrier is determined, so the positions and length of available SL symbols can be determined, and the structure of the time unit corresponding to the carrier can be obtained through division. In this manner, the gain of different symbols is differentially controlled, and thus automatic gain control is achieved.

In an embodiment, the structure of the time unit includes a position of a special symbol within the time unit.

The special symbol includes at least one of an AGC symbol, a GP symbol or a PSFCH symbol.

In an embodiment, the structure of the time unit includes the content described below.

For a first type sidelink communication mode or a second type sidelink communication node, an AGC symbol is located on a first sidelink symbol within a time unit.

The first type sidelink communication mode and the second type sidelink communication mode use the same subcarrier spacing (SCS) and the same symbol allocation parameter within the same carrier.

In the embodiment, the first type sidelink communication mode may be understood as that a communication device is a first type device and uses a first type V2X communication protocol. Similarly, the second type sidelink communication mode may be understood as that a communication device is a second type device and uses a second type V2X communication protocol. By analogy, an n-th type sidelink communication mode may be understood as that a communication device is an n-th type device and uses an n-th type V2X communication protocol, where n is a positive integer.

It is to be noted that the first type V2X communication protocol (referred to as C1-V) may refer to LTE V2X, and the device corresponding to the first type V2X communication protocol may be referred to as the first type device.

The second type V2X communication protocol (referred to as C2-V) may refer to NR V2X, and the device corresponding to the second type V2X communication protocol is referred to as the second type device.

The third type V2X communication protocol (referred to as C3-V) may refer to previous-version NR V2X, such as Rel-15/16/17, and the device corresponding to the third type V2X communication protocol may be referred to as a third type device.

The fourth type V2X communication protocol (referred to as C4-V) may refer to later-version NR V2X, such as Rel-18 and subsequent protocols, and the device corresponding to the fourth type V2X communication protocol may be referred to as a fourth type device.

The second type V2X communication protocol (C2-V) includes the third type V2X communication protocol (C3-V) and the fourth type V2X (C4-V) communication protocol.

The subcarrier spacing Δ*f* satisfies that Δ*f* = 2*^{µ}* * 15kHz , where the value of *µ* is an integer number, that is, different values of *µ* correspond to different subcarrier spacing, and thus duration of one OFDM symbol corresponding to value *µₓ* is equal to duration of 2*^{µ_{y}-µₓ}* OFDM symbols corresponding to value *µ_{y}*.

A serial number of the last OFDM symbol within one subframe, one slot or one short slot (the length of the short slot is shorter relative to the length of one slot) is #n. If the number of symbols in a slot composed of OFDM symbols composed of normal cyclic prefixes is 14, #n is #13 (that is, 14 minus 1). If the number of symbols in a slot composed of OFDM symbols composed of extended cyclic prefixes is 12, #n is #11 (that is, 12 minus 1). If the number of symbols in a short slot composed of OFDM symbols composed of normal cyclic prefixes is 7, then #n is #6 (that is, 7 minus 1). For example, the instance below uses the example where #n is #13 (that is, the number of symbols in a slot composed of OFDM symbols composed of normal cyclic prefixes is 14) to illustrate the determination of the structure of the time unit. Other cases of #n are not repeated.

FIG. 2 is an implementation diagram of a structure of the time unit according to an embodiment. In the embodiment, the first type sidelink communication mode and the second type sidelink communication mode use the same subcarrier spacing and the same symbol allocation parameter within the same carrier. As shown in FIG. 2, C1-V may represent the carrier in the first type sidelink communication mode, using subcarrier spacing (SCS) of 15 kHz, and C2-V may represent the carrier in the second type of sidelink communication mode, using SCS of 15 kHz.

In C1-V, for example, symbol #0 to symbol #13 are a time unit; for SL symbol allocation, within the time unit, the first SL symbol, that is, symbol #0, serves as the AGC symbol, and symbol #13 serves as the GP symbol.

In an embodiment, the structure of the time unit includes the content described below.

For a first type sidelink communication mode, an AGC symbol is located on a first sidelink symbol within a time unit.

For a second type sidelink communication mode, an AGC symbol is located on a first sidelink symbol within a time unit or located on a first sidelink symbol to an M-th sidelink symbol within a time unit, where M is an integer greater than 1, and duration of the first sidelink symbol to the M-th sidelink symbol is the same as duration of the AGC symbol in the first type sidelink communication mode.

The first type sidelink communication mode and the second type sidelink communication mode use different subcarrier spacing and different symbol allocation parameters within the same carri er.

FIG. 3 is an implementation diagram of another structure of the time unit according to an embodiment. In the embodiment, the first type sidelink communication mode and the second type sidelink communication mode use different subcarrier spacing and different symbol allocation parameters within the same carrier. As shown in FIG. 3, C1-V uses SCS of 15 kHz, C2-V (that is, including C2-V1, C2-V2, C2-V3 and C2-V4) uses SCS larger than 15 kHz. The example where C2-V uses SCS of 30 kHz is used for illustration here.

The case where start and end boundaries of the time unit of C2-V are not aligned with start and end boundaries of an LTE subframe is not expected in the system. For example, three cases C2-V1, C2-V2 and C2-V3, in FIG. 3 are not expected. In C2-V1, for example, symbol #0 to symbol #13 are a time unit; for SL symbol allocation, within the time unit, the first SL symbol, that is, symbol #0, serves as the AGC symbol, and symbol #13 serves as the GP symbol. In C2-V2, for example, symbol #14 to symbol #27 are a time unit; for SL symbol allocation, within the time unit, the first SL symbol, that is, symbol #14, serves as the AGC symbol, and symbol #27 serves as the GP symbol. In C2-V3, for example, symbol #0 to symbol #13 are a time unit, and symbol #14 to symbol #27 are a time unit; for SL symbol allocation, within each time unit, the first SL symbol, that is, symbol #0 and symbol #14, serves as the AGC symbol, and the last SL symbol, that is, symbol #13 and symbol #27, serves as the GP symbol.

The case where start and end boundaries of the time unit of C2-V are aligned with start and end boundaries of the LTE subframe is expected in the system. For example, the fourth case C2-V4 in FIG. 3 is expected. In C2-V4, for example, symbol #0 to symbol #27 are a time unit; for SL symbol allocation, within the time unit, the first SL symbol, that is, symbol #0, serves as the AGC symbol, and symbol #27 serves as the GP symbol.

In C1-V, for example, symbol #0 to symbol #13 are a time unit; for SL symbol allocation, within the time unit, the first SL symbol, that is, symbol #0, serves as the AGC symbol, and symbol #13 serves as the GP symbol.

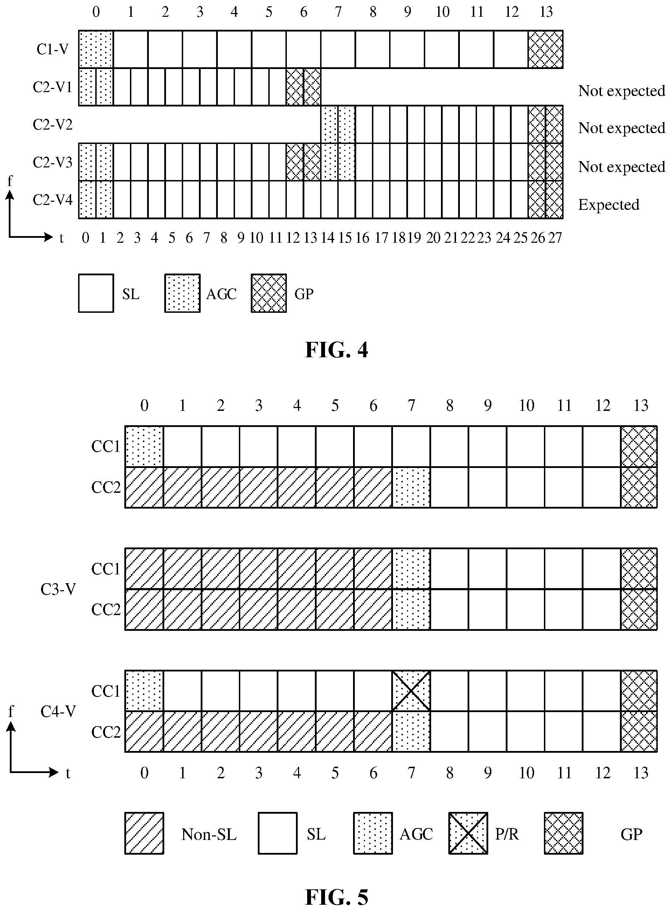

FIG. 4 is an implementation diagram of another structure of the time unit according to an embodiment. In the embodiment, the first type sidelink communication mode and the second type sidelink communication mode use different subcarrier spacing and different symbol allocation parameters within the same carrier. As shown in FIG. 4, C2-V1, C2-V2 and C2-V3 are not expected. In C1-V, for example, symbol #0 to symbol# 13 are a time unit; for SL symbol allocation, within the time unit, the first SL symbol, that is, symbol #0, serves as the AGC symbol, and symbol #13 serves as the GP symbol.

In C2-V2, for example, symbol #0 to symbol #27 are a time unit; for SL symbol allocation, within the time unit, the first SL symbol and the second SL symbol, that is, symbol #0 and symbol #1, serve as the AGC symbols so that duration of symbol #0 and symbol #1 (M symbols, that is, the first SL symbol to the M-th SL symbol, where M is 2) in C2-V4 is the same as duration of symbol #0 in C1-V (that is, duration of the first SL symbol to the M-th SL symbol in the second type sidelink communication mode, that is, in C2-V4, is the same as duration of the AGC symbol in the first type sidelink communication mode, that is, C1-V). Similarly, symbol #26 and symbol #27 in C2-V4 serve as the GP symbols so that duration of symbol #26 and symbol #27 (N symbols, where N is 2) in C2-V4 is the same as duration of symbol #13 in C1-V

It is to be understood that M symbols may be understood as M AGC symbols, and M AGC symbols may refer to the number of symbols used for AGC processing. N symbols may be understood as N GP symbols, and N GP symbols may refer to the number of symbols used for GP processing.

In an embodiment, in the first type sidelink communication mode and the second type sidelink communication node, start and end boundaries of time units are aligned.

In the embodiment, as shown in FIG. 3 and FIG. 4, for the first type sidelink communication mode (that is, C1-V) and the expected second type sidelink communication mode (that is, C2-V4), start and end boundaries of the time unit corresponding to the first type sidelink communication mode are aligned with start and end boundaries of the time unit corresponding to the second type sidelink communication mode. That is, symbol #0 in C1-V corresponds to symbol #0 in C2-V4, and symbol #13 in C1-V corresponds to symbol #27 in C2-V4.

In an embodiment, the structure of the time unit includes the content described below.

For a third type sidelink communication mode or a fourth type sidelink communication node, an AGC symbol of each carrier is located on a first sidelink symbol within a time unit of the each carrier.

The third type sidelink communication mode and the fourth type sidelink communication mode use the same subcarrier spacing and the same symbol allocation parameter within different carriers.

FIG. 5 is an implementation diagram of another structure of the time unit according to an embodiment. As shown in FIG. 5, C3-V represents a carrier in the third type sidelink communication mode, using SCS of 15 kHz, and C4-V represents a carrier in the fourth type sidelink communication mode, using SCS of 15 kHz.

In the embodiment, when the third type sidelink communication mode and the fourth type sidelink communication mode use the same subcarrier spacing and the same symbol allocation parameter within different carriers, in C3-V, component carrier (CC) 1 and CC2 use the same SL symbol allocation, that is, the largest Sidelink-StartSymbol (SL-StartSymbol) in CC1 and the largest SL-StartSymbol in CC2 are used as start points of SL symbols. For example, symbol #7 to symbol #13 in CC1 and symbol #7 to symbol #13 in CC2 are time units; for SL symbol allocation, within the time unit of CC1 and the time unit of CC2, the first SL symbol, that is, symbol #7, serves as the AGC symbol, and symbol #13 serves as the GP symbol. SL-StartSymbol may also refer to the rightmost symbol. For example, C3-V in FIG. 5 includes two time units (that is, symbol #0 to symbol #6 and symbol #7 to symbol #13), each of symbol #0 and symbol #7 is the start point of the respective time unit, and the rightmost symbol can be understood as symbol #7.

In C4-V, CC1 and CC2 use the same SL symbol allocation, that is, the largest SL-StartSymbol in CC1 and the largest SL-StartSymbol in CC2 are used as start points of SL symbols (not shown in FIG. 5, the SL symbol allocation here may be understood as similar to the preceding SL symbol allocation in C3-V). For example, symbol #7 to symbol #13 in CC1 and symbol #7 to symbol #13 in CC2 are time units; for SL symbol allocation, within the time unit of CC1 and the time unit of CC2, the first SL symbol, that is, symbol #7, serves as the AGC symbol, and symbol #13 serves as the GP symbol.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a first sidelink symbol within a time unit of the at least one carrier.

The third type sidelink communication mode and the fourth type sidelink communication mode use the same subcarrier spacing and different symbol allocation parameters within different carriers.

In the embodiment, as shown in FIG. 5, when the third type sidelink communication mode and the fourth type sidelink communication mode use the same subcarrier spacing and different symbol allocation parameters within different carriers, in C4-V, CC1 and CC2 use different SL symbol allocation. For example, symbol #0 to symbol #13 in CC1 is a time unit; for SL symbol allocation, within the time unit of CC1, the first SL symbol (that is, symbol #0) and symbol #7 serve as the AGC symbols, symbol #13 serves as the GP symbol, and symbol #7 in CC1 is used for being punctured for rate matching (P/R) during data mapping. Symbol #7 to symbol #13 in CC2 are a time unit; for SL symbol allocation, within the time unit of CC2, the first SL symbol, that is, symbol #7, serves as the AGC symbol, and symbol #13 serves as the GP symbol.

In C3-V, CC1 and CC2 use different SL symbol allocation (not shown in FIG. 5, the SL symbol allocation here may be understood as similar to the preceding SL symbol allocation in C4-V). For example, symbol #0 to symbol #13 in CC1 are a time unit; for SL symbol allocation, within the time unit of CC1, the first SL symbol (that is, symbol #0) and symbol #7 serve as the AGC symbols, symbol #13 serves as the GP symbol, and symbol #7 in CC1 is used for being punctured for rate matching during data mapping. Symbol #7 and symbol #13 in CC2 are a time unit; for SL symbol allocation, within the time unit of CC2, the first SL symbol, that is, symbol #7, serves as the AGC symbol, and symbol #13 serves as the GP symbol.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a middle-specified sidelink symbol within a time unit of the at least one carrier, where the middle-specified sidelink symbol includes at least one symbol which is punctured for rate matching during data mapping.

The third type sidelink communication mode and the fourth type sidelink communication mode use the same subcarrier spacing and different symbol allocation parameters within different carriers.

As shown in FIG. 5, when the third type sidelink communication mode and the fourth type sidelink communication mode use the same subcarrier spacing and different symbol allocation parameters within different carriers, in C3-V, the AGC symbol of each carrier (that is, CC1 or CC2) is located on the first SL symbol within the time unit of the each carrier.

In C4-V, CC1 and CC2 use different SL symbol allocation. For example, symbol #0 to symbol #13 in CC1 are a time unit; for SL symbol allocation, within the time unit of CC1, the first SL symbol (that is, symbol #0) and the middle-specified SL symbol (that is, symbol #7) serve as the AGC symbols, and symbol #13 serves as the GP symbol, where symbol #7 in CC1 is used for being punctured for rate matching (that is, P/R in FIG. 5) during data mapping; in this manner, the AGC symbol within the time unit of CC1 is located on the first SL symbol #0. Symbol #7 to symbol #13 in CC2 are a time unit; for SL symbol allocation, within the time unit of CC2, the first SL symbol, that is, symbol #7, serves as the AGC symbol, symbol #13 serves as the GP symbol, where puncturing may refer to removing one or more symbols from the mapped symbols after data mapping, and rate matching may refer to avoid mapping of one or more symbols.

In an embodiment, the structure of the time unit includes the content descried below.

For a third type sidelink communication mode, an AGC symbol of at least one carrier is located on a first sidelink symbol within a time unit of the at least one carrier. An AGC symbol of at least one carrier is located on a first sidelink symbol to an M-th sidelink symbol within a time unit of the at least one carrier, where M is an integer greater than 1, and duration of the first sidelink symbol to the M-th sidelink symbol is the same as duration of an AGC symbol of another carrier excluding the at least one carrier in the third type sidelink communication mode.

The third type sidelink communication mode and the fourth type sidelink communication mode use different subcarrier spacing and different symbol allocation parameters within different carriers.

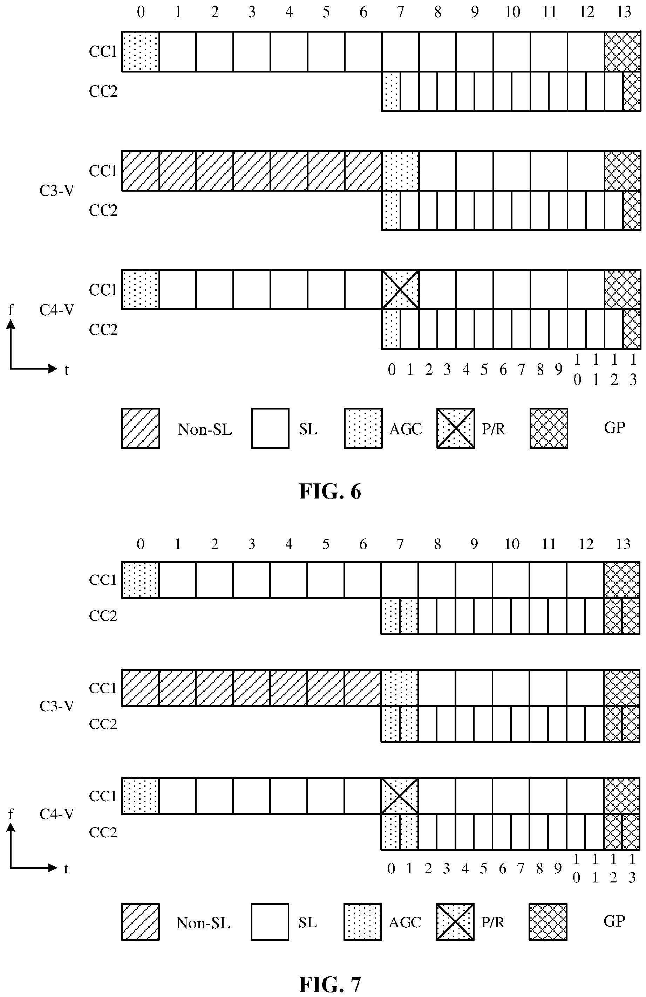

FIG. 6 is an implementation diagram of another structure of the time unit according to an embodiment. In the embodiment, the third type sidelink communication mode and the fourth type sidelink communication mode use different subcarrier spacing and different symbol allocation parameters within different carriers. As shown in FIG. 6, C3-V uses SCS of 15 kHz, C4-V uses SCS larger than 15 kHz, and C4-V using SCS of 30 kHz is taken as an example for illustration. In C3-V, CC1 and CC2 use different SL symbol allocation, that is, the largest SL-StartSymbol in CC1 and the largest SL-StartSymbol in CC2 are used as start points of SL symbols. For example, symbol #7 to symbol #13 in CC1 are a time unit; for SL symbol allocation, within the time unit of CC1, the first SL symbol, that is, symbol #7, serves as the AGC symbol, and symbol #13 serves as the GP symbol. Symbol #0 to symbol #13 in CC2 are a time unit; for SL symbol allocation, within the time unit of CC2, the first SL symbol, that is, symbol #0, serves as the AGC symbol, and symbol #13 serves as the GP symbol.

FIG. 7 is an implementation diagram of another structure of the time unit according to an embodiment. In the embodiment, the third type sidelink communication mode and the fourth type sidelink communication mode use different subcarrier spacing and different symbol allocation parameters within different carriers. As shown in FIG. 7, C3-V uses SCS of 15 kHz, and C4-V uses SCS larger than 15 kHz, and C4-V using SCS of 30 kHz is taken as an example for illustration.

In C3-V, CC1 and CC2 use different SL symbol allocation. Symbol #0 and symbol #1 (M symbols, that is, the first SL symbol to the M-th SL symbol in CC2, where M is 2) in CC2 serve as the AGC symbols so that duration of symbol #0 and symbol #1 in CC2 is the same as duration of symbol #7 in CC1 (CC1 is another carrier excluding CC2 in the third type sidelink communication mode, that is, duration of the first SL symbol to the M-th SL symbol is the same as duration of the AGC symbol of another carrier excluding the carrier in the third type sidelink communication mode). Similarly, symbol #12 and symbol #13 in CC2 serve as the GP symbols so that duration of symbol #12 and symbol #13 (N symbols, where N is 2) in CC2 is the same as duration of symbol #13 in CC1.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a first sidelink symbol within a time unit of the at least one carrier or located on a first sidelink symbol to an M-th sidelink symbol which are within a time unit of the at least one carrier, where M is an integer greater than 1, and duration of the first sidelink symbol to the M-th sidelink symbol is the same as duration of an AGC symbol of another carrier excluding the at least one carrier in the fourth type sidelink communication mode.

The third type sidelink communication mode and the fourth type sidelink communication mode use different subcarrier spacing and different symbol allocation parameters within different carriers.

As shown in FIG. 6, in C4-V, CC1 and CC2 use different SL symbol allocation, that is, the largest SL-StartSymbol in CC1 and the largest SL-StartSymbol in CC2 are used as start points of SL symbols. For example, symbol #7 to symbol #13 in CC1 are a time unit; for SL symbol allocation, within the time unit of CC1, the first SL symbol, that is, symbol #7, serves as the AGC symbol, and symbol #13 serves as the GP symbol. Symbol #0 to symbol #13 in CC2 are a time unit; for SL symbol allocation, within the time unit of CC2, the first SL symbol, that is, symbol #0, serves as the AGC symbol, and symbol #13 serves as the GP symbol.

As shown in FIG. 7, in C4-V, CC1 and CC2 use different SL symbol allocation. Symbol #0 and symbol #1 (M symbols, that is, the first SL symbol to the M-th SL symbol in CC2, where M is 2) in CC2 serve as the AGC symbols so that duration of symbol #0 and symbol #1 in CC2 is the same as duration of symbol #7 in CC1 (CC1 is another carrier excluding CC2 in the fourth type sidelink communication mode, that is, duration of the first SL symbol to the M-th SL symbol is the same as duration of the AGC symbol of another carrier excluding the carrier in the fourth type sidelink communication mode). Similarly, symbol #12 and symbol #13 in CC2 serve as the GP symbols so that duration of symbol #12 and symbol #13 (N symbols, where N is 2) in CC2 is the same as duration of symbol #13 in CC1.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a middle-specified sidelink symbol within a time unit of the at least one carrier, where the middle-specified sidelink symbol includes at least one symbol which is punctured for rate matching during data mapping.

The third type sidelink communication mode and the fourth type sidelink communication mode use different subcarrier spacing and different symbol allocation parameters within different carriers.

As shown in FIG. 6, in C4-V, CC1 and CC2 use different SL symbol allocation. For example, symbol #0 to symbol #13 in CC1 are a time unit; for SL symbol allocation, within the time unit of CC1, the first SL symbol (that is, symbol #0) and the middle-specified SL symbol (that is, symbol #7) serve as the AGC symbols, and symbol #13 serves as the GP symbol, where symbol #7 of CC1 is used for being punctured for rate matching (that is, P/R in FIG. 6) during data mapping.

As shown in FIG. 7, in C4-V, CC1 and CC2 use different SL symbol allocation. For example, symbol #0 to symbol #13 in CC1 are a time unit; for SL symbol allocation, within the time unit of CC1, the first SL symbol (that is, symbol #0) and the middle-specified SL symbol (that is, symbol #7) serve as the AGC symbols, and symbol #13 serves as the GP symbol, where symbol #7 in CC1 is used for being punctured for rate matching (that is, P/R in FIG. 7) during data mapping.

In an embodiment, the method further includes the content described below.

For a fourth type sidelink communication mode, at least one set of symbol allocation parameters are determined according to a configuration manner or a pre-configuration manner.

In the embodiment, in C4-V, symbol allocation in any CC supports two cases, that is, C4-V and C3-V using the same SL symbol allocation and C4-V and C3-V using different SL symbol allocation. The two cases may be determined in the configuration manner or the pre-configuration manner. The configuration manner refers to configuring one of the preceding two cases; the pre-configuration manner refers to that only one of the preceding two cases exists in the system. C4-V and C3-V using the same SL symbol allocation can be understood as that one set of symbol allocation parameters are determined. C4-V and C3-V using different SL symbol allocation can be understood as that two sets of symbol allocation parameters are determined.

How to perform carrier aggregation (CA) according to a PSFCH is exemplarily illustrated below through different embodiments. It is assumed that a subframe, a slot, a CC or a resource pool on a CC includes a PSFCH, and one or the manners described below is used.

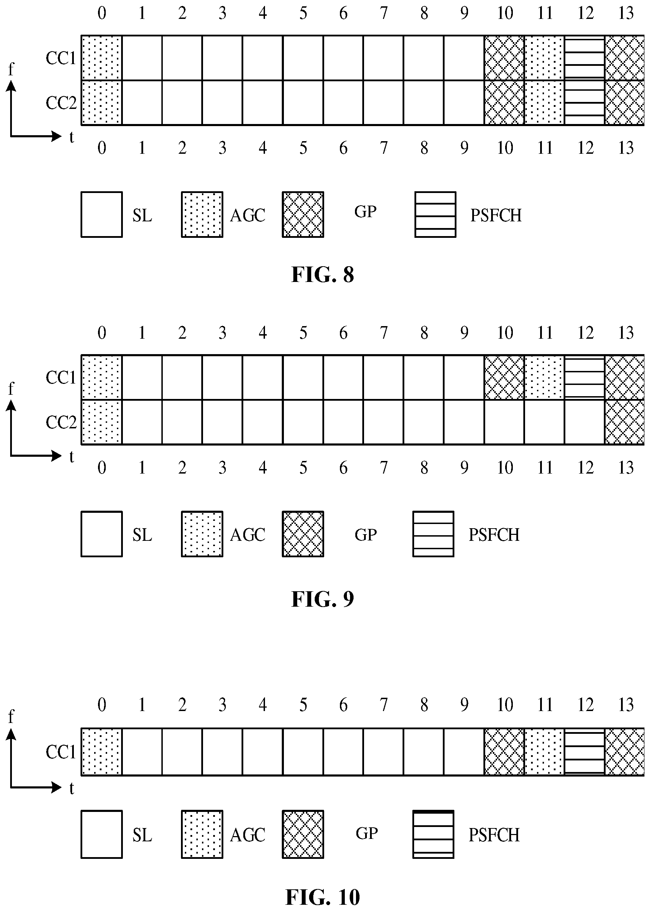

FIG. 8 is an implementation diagram of performing carrier aggregation according to a PSFCH according to an embodiment. As shown in FIG. 8, CAis performed on CCs, each of CCs includes a PSFCH and uses the same symbol allocation, and the structure of the time unit of each CC (that is, CC1 and CC2) may be determined by using the method for determining a structure of time unit provided in the preceding embodiments, where a symbol before the PSFCH (that is, symbol #11) also serves as the first SL symbol of a time unit.

FIG. 9 is another implementation diagram of performing carrier aggregation according to a PSFCH according to an embodiment. As shown in FIG. 9, when a certain CC, such as CC1, includes a PSFCH, CC1 does not serve as a CC for CA, and the structure of the time unit of other CCs may be determined by using the method for determining a structure of time unit provided in the preceding embodiments; when CC1 does not include a PSFCH, CC1 serves as a CC for CA, and each CC (that is, CC1 and CC2) uses the method for determining a structure of time unit provided in the preceding embodiments.

Alternatively, when a resource pool on a certain, such as CC1, includes a PSFCH, CC1 does not serve as a CC for CA, and other CCs uses the method for determining a structure of time unit provided in the preceding embodiments; when the resource pool on CC1 does not include a PSFCH, CC1 serves as a CC for CA, and each CC uses the method for determining a structure of time unit provided in the preceding embodiments.

FIG. 10 is another implementation diagram of performing carrier aggregation according to a PSFCH according to an embodiment. As shown in FIG. 10, only a specific CC, such as CC1, includes a PSFCH, and other CCs use the method for determining a structure of time unit provided in the preceding embodiments.

According to the method for determining a structure of time unit provided in the present application, the position of the AGC symbol can be determined when the same or different subcarrier spacing is used, how the communication device processes the AGC symbol can be determined, and the positions and length of available SL symbols can be determined.

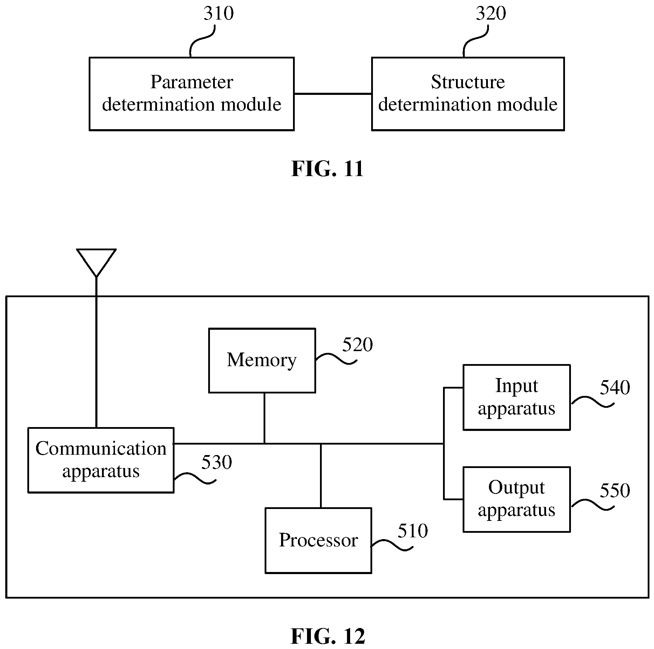

An embodiment of the present application further provides a structure of the time unit determination apparatus. FIG. 11 is a structural diagram of a structure of the time unit determination apparatus according to an embodiment. As shown in FIG. 11, the structure of the time unit determination apparatus includes a parameter determination module 310 and a structure determination module 320.

The parameter determination module 310 is configured to determine a symbol allocation parameter of a carrier.

The structure determination module 320 is configured to determine a structure of the time unit of the carrier according to the symbol allocation parameter.

According to the structure of the time unit determination apparatus in the embodiment, the symbol allocation parameter of the carrier is determined, so the positions and length of available SL symbols can be determined, and the structure of the time unit corresponding to the carrier can be obtained through division. In this manner, the gain of different symbols is differentially controlled, and thus automatic gain control is achieved.

In an embodiment, the structure of the time unit includes a position of a special symbol within a time unit.

The special symbol includes at least one of an AGC symbol, a GP symbol or a PSFCH symbol.

In an embodiment, the structure of the time unit includes the content described below.

For a first type sidelink communication mode or a second type sidelink communication node, an AGC symbol is located on a first sidelink symbol within a time unit.

The first type sidelink communication mode and the second type sidelink communication mode use the same subcarrier spacing and the same symbol allocation parameter within the same carrier.

In an embodiment, the structure of the time unit includes the content described below.

For a first type sidelink communication mode, an AGC symbol is located on a first sidelink symbol within a time unit.

For a second type sidelink communication mode, an AGC symbol is located on a first sidelink symbol within a time unit or located on a first sidelink symbol to an M-th sidelink symbol within a time unit, where M is an integer greater than 1, and duration of the first sidelink symbol to the M-th sidelink symbol is the same as duration of the AGC symbol in the first type sidelink communication mode.

The first type sidelink communication mode and the second type sidelink communication mode use different subcarrier spacing and different symbol allocation parameters within the same carrier.

In an embodiment, in the first type sidelink communication mode and the second type sidelink communication node, start and end boundaries of time units are aligned.

In an embodiment, the structure of the time unit includes the content described below.

For a third type sidelink communication mode or a fourth type sidelink communication node, an AGC symbol of each carrier is located on a first sidelink symbol within a time unit of the each carrier.

The third type sidelink communication mode and the fourth type sidelink communication mode use the same subcarrier spacing and the same symbol allocation parameter within different carriers.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a first sidelink symbol within a time unit of the at least one carrier.

The third type sidelink communication mode and the fourth type sidelink communication mode use the same subcarrier spacing and different symbol allocation parameters within different carriers.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a middle-specified sidelink symbol within a time unit of the at least one carrier, where the middle-specified sidelink symbol includes at least one symbol which is punctured for rate matching during data mapping.

The third type sidelink communication mode and the fourth type sidelink communication mode use the same subcarrier spacing and different symbol allocation parameters within different carriers.

In an embodiment, the structure of the time unit includes the content descried below.

For a third type sidelink communication mode, an AGC symbol of at least one carrier is located on a first sidelink symbol within a time unit of the at least one carrier. An AGC symbol of at least one carrier is located on a first sidelink symbol to an M-th sidelink symbol within a time unit of the at least one carrier, where M is an integer greater than 1, and duration of the first sidelink symbol to the M-th sidelink symbol is the same as duration of an AGC symbol of another carrier excluding the at least one carrier in the third type sidelink communication mode.

The third type sidelink communication mode and the fourth type sidelink communication mode use different subcarrier spacing and different symbol allocation parameters within different carriers.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a first sidelink symbol within a time unit of the at least one carrier or located on a first sidelink symbol to an M-th sidelink symbol which are within a time unit of the at least one carrier, where M is an integer greater than 1, and duration of the first sidelink symbol to the M-th sidelink symbol is the same as duration of an AGC symbol of another carrier excluding the at least one carrier in the fourth type sidelink communication mode.

The third type sidelink communication mode and the fourth type sidelink communication mode use different subcarrier spacing and different symbol allocation parameters within different carriers.

In an embodiment, the structure of the time unit includes the content described below.

For a third type sidelink communication mode, an AGC symbol of each carrier is located on a first sidelink symbol within a time unit of the each carrier.

For a fourth type sidelink communication mode, an AGC symbol of at least one carrier is located on a middle-specified sidelink symbol within a time unit of the at least one carrier, where the middle-specified sidelink symbol includes at least one symbol which is punctured for rate matching during data mapping.

The third type sidelink communication mode and the fourth type sidelink communication mode use different subcarrier spacing and different symbol allocation parameters within different carriers.

In an embodiment, the apparatus further includes an allocation parameter determination module.

The allocation parameter determination module is configured to, for a fourth type sidelink communication mode, determine at least one set of symbol allocation parameters according to a configuration manner or a pre-configuration manner.

The structure of the time unit determination apparatus provided in the embodiment and the method for determining a structure of time unit provided in the preceding embodiments belong to the same concept. For technical details not described in detail in the embodiment, reference may be made to any one of the preceding embodiments. The embodiment has the same beneficial effects as the method for determining a structure of time unit performed.

An embodiment of the present application further provides a communication device. FIG. 12 is a structural diagram of hardware of a communication device according to an embodiment. As shown in FIG. 12, the communication device provided in the present application includes a memory 520, a processor 510 and a computer program stored in the memory and executable by the processor. The processor 510, when executing the computer program, implements the preceding method for determining a structure of time unit.

The communication device may further include the memory 520; one or more processors 510 may be provided in the communication device, and one processor 510 is used as an example in FIG. 12; the memory 520 is configured to store one or more programs; when executed by the one or more processors 510, the one or more programs cause the one or more processors 510 to implement the method for determining a structure of time unit in the embodiments of the present application.

The communication device further includes a communication apparatus 530, an input apparatus 540, and an output apparatus 550.

The processor 510, the memory 520, the communication apparatus 530, the input apparatus 540 and the output apparatus 550 in the communication device may be connected through a bus or in other manners, and the connection through the bus is shown as an example in FIG. 12.

The input apparatus 540 may be used for receiving input digital or character information and generating keying signal input related to user settings of the communication device and function control of the communication device. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs and modules, such as program instructions/modules (for example, the parameter determination module 310 and the structure determination module 320 in the structure of the time unit determination apparatus) corresponding to the method for determining a structure of time unit in the embodiments of the present application. The memory 520 may include a program storage region and a data storage region. The program storage region may store an operating system and an application program required by at least one function. The data storage region may store data created according to the use of the communication device. Additionally, the memory 520 may include a high-speed random-access memory and may also include a nonvolatile memory such as at least one magnetic disk memory, a flash memory or another nonvolatile solid-state memory. In some examples, the memory 520 may further include memories remotely disposed relative to the processor 510, and these remote memories may be connected to the communication device via a network. Examples of the preceding network include, but are not limited to, the Internet, an intranet, a local area network, a mobile communication network and a combination thereof.

An embodiment of the present application further provides a storage medium. The storage medium is configured to store a computer program which, when executed by a processor, causes the processor to implement the method for determining a structure of time unit described in any embodiment of the present application. The method for determining a structure of time unit includes the following. A symbol allocation parameter of a carrier is determined; and a structure of the time unit of the carrier is determined according to the symbol allocation parameter.

A computer storage medium in an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system, apparatus or device or any combination thereof. More specific examples (a non-exhaustive list) of the computer-readable storage medium include: an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof. The computer-readable storage medium may be any tangible medium including or storing a program. The program may be used by or used in conjunction with an instruction execution system, apparatus or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal or any suitable combination thereof. The computer-readable signal medium may also be any computer-readable medium other than the computer-readable storage medium. The computer-readable medium may send, propagate or transmit a program used by or used in conjunction with an instruction execution system, apparatus or device.

Program codes included in the computer-readable medium may be transmitted by any suitable medium including, but not limited to, a wireless medium, a wire, an optical cable, a radio frequency (RF) or any suitable combination thereof.

Computer program codes for performing operations of the present application may be written in one or more programming languages or a combination thereof. The programming languages include object-oriented programming languages such as Java, Smalltalk and C++ and may further include conventional procedural programming languages such as "C" and similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term "user equipment" encompasses any suitable type of radio user device such as a mobile phone, a portable data processing apparatus, a portable web browser or an in-vehicle mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). The computer-readable medium may include a non-transitory storage medium. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A method for determining a structure of time unit, comprising:
determining a symbol allocation parameter of a carrier; and
determining a structure of the time unit of the carrier according to the symbol allocation parameter.

2. The method according to claim 1, wherein the structure of the time unit comprises a position of a special symbol in the time unit, the special symbol comprises at least one of: an automatic gain control, AGC, symbol, a guard period, GP, symbol or a physical sidelink feedback channel, PSFCH, symbol.

3. The method according to claim 1, wherein the structure of the time unit comprises:
for a first type sidelink communication mode or a second type sidelink communication node, an AGC symbol being located on a first sidelink symbol within the time unit,
wherein the first type sidelink communication mode and the second type sidelink communication mode use same subcarrier spacing and a same symbol allocation parameter within a same carrier.

4. The method according to claim 1, wherein the structure of the time unit comprises:
for a first type sidelink communication mode, an AGC symbol being located on a first sidelink symbol within the time unit; and
for a second type sidelink communication mode, an AGC symbol being located on a first sidelink symbol within the time unit or located on a first sidelink symbol to an M-th sidelink symbol within the time unit, wherein M is an integer greater than 1, and duration of the first sidelink symbol to the M-th sidelink symbol is the same as duration of the AGC symbol in the first type sidelink communication mode;
wherein the first type sidelink communication mode and the second type sidelink communication mode use different subcarrier spacing and different symbol allocation parameters within a same carrier.

5. The method according to claim 4, wherein in the first type sidelink communication mode and the second type sidelink communication node, start and end boundaries of time units are aligned.

6. The method according to claim 1, wherein the structure of the time unit comprises:
for a third type sidelink communication mode or a fourth type sidelink communication node, an AGC symbol of each carrier being located on a first sidelink symbol within a time unit of the each carrier,
wherein the third type sidelink communication mode and the fourth type sidelink communication mode use same subcarrier spacing and a same symbol allocation parameter within the each carrier.

7. The method according to claim 1, wherein the structure of the time unit comprises:
for a third type sidelink communication mode, an AGC symbol of each carrier being located on a first sidelink symbol within a time unit of the each carrier; and
for a fourth type sidelink communication mode, an AGC symbol of at least one carrier being located on a first sidelink symbol within a time unit of the at least one carrier;
wherein the third type sidelink communication mode uses a same subcarrier spacing and different symbol allocation parameters within different carriers, and the fourth type sidelink communication mode uses same subcarrier spacing and different symbol allocation parameters within different carriers.

8. The method according to claim 1, wherein the structure of the time unit comprises:
for a third type sidelink communication mode, an AGC symbol of each carrier being located on a first sidelink symbol within a time unit of the each carrier; and
for a fourth type sidelink communication mode, an AGC symbol of at least one carrier being located on a middle-specified sidelink symbol within a time unit of the at least one carrier, wherein the middle-specified sidelink symbol comprises at least one symbol which is punctured for rate matching during data mapping;
wherein the third type sidelink communication mode uses same subcarrier spacing and a same symbol allocation parameter within different carriers, and the fourth type sidelink communication mode uses same subcarrier spacing and different symbol allocation parameters within different carriers.

9. The method according to claim 1, wherein the structure of the time unit comprises: for a third type sidelink communication mode,
an AGC symbol of at least one carrier being located on a first sidelink symbol within a time unit of the at least one carrier; and
an AGC symbol of at least one carrier being located on a first sidelink symbol to an M-th sidelink symbol within a time unit of the at least one carrier, wherein M is an integer greater than 1, and duration of the first sidelink symbol to the M-th sidelink symbol is the same as duration of an AGC symbol of another carrier excluding the at least one carrier in the third type sidelink communication mode;
wherein the third type sidelink communication mode uses different subcarrier spacing and different symbol allocation parameters within different carriers, and a fourth type sidelink communication mode uses different subcarrier spacing and different symbol allocation parameters within different carriers.

10. The method according to claim 1, wherein the structure of the time unit comprises:
for a third type sidelink communication mode, an AGC symbol of each carrier being located on a first sidelink symbol within a time unit of the each carrier; and
for a fourth type sidelink communication mode, an AGC symbol of at least one carrier being located on a first sidelink symbol within a time unit of the at least one carrier or located on a first sidelink symbol to an M-th sidelink symbol which are within a time unit of the at least one carrier, wherein M is an integer greater than 1, and duration of the first sidelink symbol to the M-th sidelink symbol is the same as duration of an AGC symbol of another carrier excluding the at least one carrier in the fourth type sidelink communication mode;
wherein the third type sidelink communication mode uses different subcarrier spacing and different symbol allocation parameters within different carriers, and the fourth type sidelink communication mode uses different subcarrier spacing and different symbol allocation parameters within different carriers.

11. The method according to claim 1, wherein the structure of the time unit comprises:
for a third type sidelink communication mode, an AGC symbol of each carrier being located on a first sidelink symbol within a time unit of the each carrier; and
for a fourth type sidelink communication mode, an AGC symbol of at least one carrier being located on a middle-specified sidelink symbol within a time unit of the at least one carrier, wherein the middle-specified sidelink symbol comprises at least one symbol which is punctured for rate matching during data mapping;
wherein the third type sidelink communication mode uses different subcarrier spacing and different symbol allocation parameters within different carriers, and the fourth type sidelink communication mode uses different subcarrier spacing and different symbol allocation parameters within different carriers.

12. The method according to claim 1, further comprising:
for a fourth type sidelink communication mode, at least one set of symbol allocation parameters are determined according to a configuration manner or a pre-configuration manner.

13. A communication device, comprising a memory, a processor and a computer program stored in the memory and executable by the processor, wherein the processor, when executing the computer program, implements the method for determining a structure of time unit according to any one of claims 1 to 12.

14. A computer-readable storage medium, which is configured to store a computer program which, when executed by a processor, causes the processor to implement the method for determining a structure of time unit according to any one of claims 1 to 12.
